# EUROPEAN PATENT SPECIFICATION

(11) **EP 4 300 477 B1**
(45) Date of publication and mention of the grant of the patent: **09.12.2026**
(21) Application number: 22305949.4
(22) Date of filing: 30.06.2022
(51) Int. Cl.: G09G 5/02, G09G 5/377, H04N 19/21

(54) **ENCODING/DECODING A VIDEO SEQUENCE ASSOCIATED WITH ALPHA CHANNEL INFORMATION**
CODIERUNG/DECODIERUNG EINER MIT ALPHAKANALINFORMATIONEN VERBUNDENEN VIDEOSEQUENZ
CODAGE/DÉCODAGE D'UNE SÉQUENCE VIDÉO ASSOCIÉE À DES INFORMATIONS DE CANAL ALPHA

(43) Date of publication of application: 03.01.2024
(73) Proprietor: Beijing Xiaomi Mobile Software Co., Ltd., Beijing 100085 (CN)
(72) Inventor: THOMAS, EMMANUEL, 2611WD Delft (NL); ANDRIVON, PIERRE, 35340 LIFFRE (FR); LE LEANNEC, FABRICE, 35830 BETTON (FR); RADOSAVLJEVIC, MILOS, 35000 RENNES (FR); CHAMPEL, MARY-LUC, 35220 MARPIRE (FR)
(74) Representative: RVDB Rennes

(56) References cited:
- BOYCE J ET AL: "Additional SEI messages for VSEI (Draft 2)", no. JVET-U2006 ; m56277, 5 March 2021 (2021-03-05), XP030293389, Retrieved from the Internet <URL:https://jvet-experts.org/doc_end_user/documents/21_Teleconference/wg11/JVET-U2006-v1.zip JVET-U2006-v1.docx> [retrieved on 20210305]
- NACCARI M ET AL: "RExt HLS (AHG5 and 9): SEI message for alpha channel information", no. JCTVC-P0123, 16 January 2014 (2014-01-16), XP030239446, Retrieved from the Internet <URL:http://phenix.int-evry.fr/jct/doc_end_user/documents/16_San%20Jose/wg11/JCTVC-P0123-v4.zip JCTVC-P0123_r3.doc> [retrieved on 20140116]
- THOMAS (XIAOMI) E ET AL: "AHG9: Transparency information SEI for transparent screens", no. JVET-Y0104, 5 January 2022 (2022-01-05), XP030300378, Retrieved from the Internet <URL:https://jvet-experts.org/doc_end_user/documents/25_Teleconference/wg11/JVET-Y0104-v1.zip JVET-Y0104.docx> [retrieved on 20220105]

## Description

### FIELD

The present application generally relates to encoding/decoding video sequence and signaling associated alpha channel information. Particularly, but not exclusively, the present application relates to an encoding/decoding method, apparatus comprises means for performing one of the methods, bitstreams formatted to include encoded data and an alpha channel indicator obtained from the encoding method, computer program product including instructions which, when the program is executed by one or more processors, causes the one or more processors to carry out the encoding/decoding methods and a non-transitory storage medium carrying instructions of program code for executing the encoding/decoding method.

### BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

A pixel corresponds to the smallest display unit on a screen, which can be composed of one or more sources of light (1 for monochrome screen or 3 or more for colour screens).

A video sequence is a temporal succession of video frames.

A video frame, also denoted image or picture, comprises at least one component (also called channel) determined by a specific picture/video format which specifies all information relative to samples values and all information which may be used by a display unit and/or any other device to display and/or to decode video picture data related to said video frame in order to generate pixel values.

A video frame comprises at least one component usually expressed in the shape of a 2D array of samples.

A monochrome video frame comprises a single component and a color video frame (also denoted texture video frame) may comprise three components.

For example, a color video frame may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video frame may comprise a number of samples relative to a number of pixels of a screen on which the video picture is intended to be display. For instance, the number of samples comprised in a component may be the same as, or a multiple (or fraction) of, a number of pixels of a screen on which the video frame is intended to be display.

The number of samples comprised in a component may also be a multiple (or fraction) of a number of samples comprised in another component of a same video frame.

For example, in the case of a video format comprising a luma component and two chroma components like the (Y,Cb,Cr) format, dependent on the color format considered, the chroma component may contain half the number of samples in width and/or height, relative to the luma component.

A sample is the smallest visual information unit of a component composing a video frame. A sample value may be, for example a luma or chroma value or a colour value of the red, green or blue component of a (R, G, B) format.

A pixel value of a screen may be represented by one sample for monochrome video picture and by multiple co-located samples for color video frame. Co-located samples associated with a pixel mean samples corresponding to the location of a pixel in the screen.

It is common to consider a video frame as being a set of pixel values, each pixel being represented by at least one sample.

In computer graphics, alpha compositing or alpha blending is the process of combining one image with a background to create the appearance of partial or full transparency.

It is often useful to render picture elements (pixels) in separate passes or layers and then combine the resulting 2D images into a single, final image called the composite. Compositing is used extensively in film when combining computer-rendered image elements with live footage.

Alpha blending is also used in 2D computer graphics to put rasterized foreground elements over a background.

Alpha blending uses an alpha channel. If an alpha channel is used in an image, there are two common representations that are available: straight (un-associated) alpha and pre-multiplied (associated) alpha.

With straight alpha, RGB components of an image represent the colour of an object or a pixel, disregarding its opacity.

With pre-multiplied alpha, the RGB components represent the emission of the object or pixel, and the alpha represents the occlusion.

The alpha channel may also be used in transparency level adaptation for see-through (transparent) displays (screens).

Historically, the first versions of see-through display were using LCD display technology in the 2010s. However, LCD transparent screens merely filter the incoming light from the behind the TV to illuminate the pixels which effectively means that those screens could not work in a dark room. This is one of the reasons why OLED-based see-through display quickly became a more promising approach since OLED screens sport self-emitting pixels. That is, each pixel of an OLED screen contains its source of light. In a nutshell, an OLED-based see-through display is made of a regular OLED screen in which the manufacturer has punched a very large number of holes so that the light can traverse the screen from behind. Note that since the OLED screen emits light only in one direction, a viewer behind the screen would not be able to see the displayed content on the screen.

For both LCD and OLED-based transparent screens, the fact that the viewer is able to perceive the scene or parts of the scene behind the TV is determined by the value of the pixels. There are two extreme cases. The first one is when the user doesn't see at all what is behind the screen, i.e. total opacity. The second one is when the user fully sees what is behind the TV and no other image displayed on the TV, total transparency. In between those cases, there is a continuous spectrum of transparency level wherein the user sees the displayed image on the screen overlayed on top of the scene behind the TV. All those cases, full opacity, full transparency and intermediate transparency can be for the entire screen or localised up to a granularity of a pixel for the best see-through display technology such as current OLED displays.

Depending on LCD or OLED technologies, each of the effects described above, i.e. full opacity, full transparency and intermediate transparency, is realised in a different manner. For LCDs, a pixel is black when as much light as possible coming from the light source is stopped. As a result, a dark pixel will not let the light from behind the TV traverse and will appear opaque for the viewer. Conversely, for OLEDs, a pixel is white when all the light comes through all the sub colour pixels to form a white light beam. As a result, the light from behind may also traverse the pixel through the holes and thus the objects behind may be visible to the viewer, hence creating the transparency effect.

Both LCD and OLED screens may display a grayscale gradient from left (white) to right (black). On a transparent OLED, the black pixels (light turned off) let the light coming from behind passing through the screen. This effectively means that in this simple version of transparent OLED screen, it is not possible to display black on the screen. Conversely, it is not possible to display white pixels on transparent LCD screens provided the scene on the back of the TV is not white.

There are OLED TV models wherein an additional layer is placed right behind the screen. This additional layer is responsible for dimming the light coming from behind. The purpose of this dimming layer is to improve OLED-based transparent screen in such a way that dark pixels can also be made opaque by activating this layer. Another use of this layer is to switch between a conventional opaque TV to a transparent TV mode. There can be indeed cases where the content is not made for transparent screens and leads to a bad user experience in which case it is advantageous for the user to be able to switch to a conventional opaque TV mode. As of today, it seems that it is possible to activate this dimming layer at different levels of dimming intensity but only for the whole screen at once. That is, the dimming layer doesn't seem to be yet able to be localised to some regions/pixels of the screen. However, this feature can be anticipated in future commercialised versions.

The perceived transparency depends on:
- the intensity level of the sample which leads to pixel that are brighter and thus the opaquer for OLED (the opposite for LCD);
- the amount of light coming from behind the TV, the lighter coming the more transparent the image is perceived because object behind will be visible;
- the ability of blocking the light coming from behind the TV via a dimming back panel.

With those three means (and possible more in the future), the level of pixels transparency perceived by the user may be adjusted to match with a content creator intent.

One way to adjust an image sample is to consider the displayed image as superimposed on a black (for OLED screens) background by doing alpha blending operation. This way, the parts of the image desired to be more transparent will have a low alpha coefficient which increases the level of black in the composited image due to the factor equal to (1-alpha). However, this doesn't account for a possibly needed increase of brightness in the opposite case where the region should be opaque, despite the possible natural light coming from behind the TV. If a region of the image has a high coefficient value (say 1), an alpha blending will simply keep the sample the same (value multiplied by alpha), however, due for instance by an intense ambient lighting, it may be needed to increase the value of those luminance samples by a greater factor than just alpha (value 1). In addition, if there is back panel dimming the light behind the TV, the receiver may not even need to adjust some sample value to make a region opaque. Activating the dimming panel is enough, if possible localized to this region in the image.

As a result, transporting the alpha channel for transparent screen is relevant but simply applying an alpha blending is not enough to recreate the perceived transparency effect.

Alpha channel and alpha blending have been implemented in video coding standards based on auxiliary pictures associated with primary pictures and SEI (Supplemental Enhancement Information) messages.

Basically, in an alpha blending process, the samples of an auxiliary picture are interpreted, thanks to information of SEI messages, as indications of the degree of opacity (or, equivalently, the degrees of transparency) associated with the corresponding luma samples of a primary picture.

For example, the current draft of VSEI (Versatile Supplemental Enhancement Information messages for coded video bitstreams ) standard (JVET-Y2006, Additional SEI messages for VSEI (Draft 6), 25^{th} meeting JVET of of ITU-T SG 16 WP 3 and ISO/IEC JTC 1/SC 29, 12-21 January 2022) defines an alpha channel information SEI message (section 8.23) and a Scalability Dimension Information (SDI) SEI message (section 8.19). The SDI SEI message provides a scalability dimension information for each layer such as 1) when there may be multiple views, the view ID of each layer; and 2) when there may be auxiliary information (such as depth or alpha) carried by one or more layers, the auxiliary ID of each layer. The Alpha Channel Information (ACI) SEI message provides information about alpha channel sample values and post-decoding processing applied to the decoded alpha planes coded in auxiliary pictures and one or more associated decoded primary pictures.

The ACI SEI signalling in the VSEI specification does not cover transparency levels intent (e.g. selected at the production side by the film director/producer) for transparent-screen usage purposes but instead predominantly assumes conventional alpha blending operations.

The ACI SEI signalling in the VSEI specification does not allow that post-decoding processing related to transparent screens and since alpha blending are different, the intent should be differentiated (even in case some required parameters semantics would be identical).

Moreover, in case the syntax and semantics of auxiliary pictures of a current video coding standard would be hijacked for transparent screen purposes, VSEl-like signalling does not avoid upstream equipment (source) to a TV to interpret and apply processing of auxiliary pictures rather than processing dedicated to transparent screen which may be different especially according to the underlying technology used (OLED vs LCD).

In case both alpha channel and transparency intent should be conveyed at the same time, VSEI signalling does not provide any mechanism to determine how this should be operated (processing order, identification of appropriate SEI for the appropriate processing...).

As can be appreciated from the prior art, the concept of image composition assumes two images, say foreground F and background B images, wherein the foreground image is overlaid on top of the background image. In order to calculate the resulting pixels from the composition of corresponding pixels from the two images, a mathematical formula has been established that is O = F × α + B × (1 - α). Hence the need to know the coefficient α for each pixel location. From this coefficient name, the alpha plane (also called alpha channel) was conceptualised and the related image composition alpha blending. As a result, there is a coupling by design of alpha blending and alpha channel. This coupling can also be observed in video delivery specifications such as video coding and video and image carriage format whereby alpha channels are always used for the purpose of alpha blending.

However, there exists other usage scenarios, such as displaying image and video on transparent screens, wherein an alpha channel can be transmitted along with the visual content such that the receiving device adapts the pixels transparency intensity of the displayed content based on the signalled information as presented earlier.

A need is to improved alpha channel signalling known in prior art to decoupling the assumed alpha blending post-decoding processing from other types post-decoding processing. Additionally, another need is to solve the ambiguity of signalling an alpha channel sequence when the use is unspecified (as seen in several video coding standards) such that interoperability can be achieved. Lastly, another need is to improve compression efficiency by signalling only relevant parameters associated with a post-decoding processing, e.g. parameters in alpha channel signalling only relevant for alpha blending are syntactically excluded in other post-decoding processing so that bit information can be saved for the transmission as well as avoiding the need to specify dummy values when alpha blending is the post-decoding processing.

At least one exemplary embodiment of the present application has been devised with the foregoing in mind.

Document BOYCE J ET AL: "Additional SEI messages for VSEI (Draft 2)",21. JVET MEETING; 20210106 - 20210115; TELECONFERENCE; (THE JOINT VIDEO EXPLORATION TEAM OF ISO/IEC JTC1/SC29/WG11 AND ITU-T SG.16 ),,no. JVET-U2006 ; m56277 5 March 2021 (2021-03-05), contains the draft text for changes to the versatile supplemental enhancement information messages for coded video bitstreams (VSEI) standard (Rec. ITU-T H.274 | ISO/IEC 23002-7), to specify additional SEI messages, including the alpha channel information SEI message.

Document NACCARI M ET AL: "RExt HLS (AHG5 and 9): SEI message for alpha channel information",16. JCT-VC MEETING; 20140109 - 20140117; SAN JOSE; (JOINT COLLABORATIVE TEAM ON VIDEO CODING OF ISO/IEC JTC1/SC29/ WG11 AND ITU-T SG.16 ),,no. JCTVC-P0123 16 January 2014 (2014-01-16) contains a proposal for alpha channel SEI message.

Document THOMAS (XIAOMI) E ET AL: "AHG9: Transparency information SEI for transparent screens",25. JVET MEETING; 20220112 - 20220121; TELECONFERENCE; (THE JOINT VIDEO EXPLORATION TEAM OF ISO/ IEC JTC1/SC29/WG11 AND ITU-T SG.16 ),,no. JVET-Y0104 5 January 2022 (2022-01-05) contains a proposal to define metadata payload to signal the content creator intent with respect to how the decoded pictures should look like on a transparent display, i.e., which area should be transparent and to what degree.To this end, a SEI signaling is presented which is asserted to address the above requirement and enable the transformation of the decoded pictures after decoding for both legacy and new content video content.

### SUMMARY

The scope of the invention is defined in the appended set of claims.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic block diagram of steps of the method 100 of encoding into a bitstream a video sequence associated with alpha channel information and intended to be displayed on a transparent screen in accordance with an exemplary embodiment;
**Figure 2** shows a schematic block diagram of steps of the method 200 of decoding from a bitstream a video sequence associated with alpha channel information and intended to be displayed on a transparent screen in accordance with an exemplary embodiment; and
**Figure 3** shows a schematic block diagram illustrating an example of a system in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the scope of the claims.

Generally speaking, an alpha channel indicator is signalled as part of alpha channel information associated with a video sequence. The alpha channel indicator indicates for which type of post-decoding processing the alpha channel information is intended for.

Alpha blending is then applied on a decoded video sequence only if said alpha channel indicator indicates that alpha channel information is intended for that.

Different post-decoding processing may be applied on a decoded video sequence to recreate a transparency level intent for transparent-screen usage purposes.

Signalling said alpha channel indicator allows that post-decoding processing related to transparent screen and alpha blending are different so the intent should be differentiated (even in case some required parameters semantics would be identical).

Signalling said alpha channel indicator avoids upstream equipment (source) to a TV to interpret and apply processing of auxiliary pictures rather than processing dedicated to transparent screen which may be different especially according to the underlying technology used (OLED vs LCD).

Signalling said alpha channel indicator improves alpha channel signalling known in prior art because it allows decoupling the assumed alpha blending post-decoding processing from other types post-decoding processing.

Additionally, signalling said alpha channel indicator solves the ambiguity of signalling an alpha channel sequence when the use is unspecified (as seen in several video coding standards) such that interoperability can be achieved.

Lastly, signalling said alpha channel indicator improves compression efficiency by signalling only relevant parameters associated with a post-decoding processing, e.g. parameters in alpha channel signalling only relevant for alpha blending are syntactically excluded in other post-decoding processing so that bit information can be saved for the transmission as well as avoiding the need to specify dummy values when alpha blending is the post-decoding processing.

The following exemplary embodiments are described to show how to modify the VSEI syntax and semantic of the alpha channel SEI message in order to exercise the invention.

The present invention is not limited to the current version of VSEI syntax but extend to any editorial variation of said current VSEI syntax.

In a first exemplary embodiment, the alpha channel indicator is an additional syntax element included in the current alpha channel information SEI message of VSEI (ACI SEI message).

Hence adding the additional syntax element in the ACI SEI message separates the roles: the additional syntax element is intended to normatively influence the syntax of the ACI SEI message and the current syntax element **alpha_channel_use_idc** is used as a sub registration range of uses.

In a first variant of the first embodiment, the additional syntax element is a syntax element **alpha_channel_idc** included in the current ACI SEI message of VSEI that:
- equal 0 to indicate that the ACI SEI message is intended for alpha blending purposes;
- equal 1 to indicate that the ACI SEI message is intended for pixel's transparent of a transparent screen;
- equal 2 to indicate that the ACI SEI message is intended for an unspecified purpose.

Table 1 provides an example of syntax of the amended alpha channel information SEI message as defined in VSEI according to said first variant of the first exemplary embodiment.

**Table 1**

| | |
|---|---|
| alpha_channel_info( payloadSize ) { | **Descriptor** |
| **alpha_channel_idc** | u(3) |
| **alpha_channel_cancel_flag** | u(1) |
| if( !alpha_channel_cancel_flag ) { | |
| **alpha_channel_use_idc** | u(3) |
| **alpha_channel_bit_depth_minus8** | u(3) |
| **alpha_transparent_value** | u(v) |
| **alpha_opaque_value** | u(v) |
| **alpha_channel_incr_flag** | u(1) |
| **alpha_channel_clip_flag** | u(1) |
| if( alpha_channel_clip_flag ) | |
| **alpha_channel_clip_type_flag** | u(1) |
| } | |
| } | |

In a variant of the first variant, the syntax element **alpha_channel_idc,** when equal to a particular value (=0 or =1), further indicates that parameters of the ACI SEI message not involved in the pixel's transparency adjustment are not written into the bitstream or not read from the bitstream.

Table 2 provides an example of syntax of the amended alpha channel information SEI message according to said variant of the first variant. In this example, when the syntax element **alpha_channel_idc** does not equal 0, i.e. when the post-decoding processing is not alpha blending, the syntax elements **alpha_transparent_value, alpha_opaque_value, alpha_channel_incr_flag, alpha_channel_clip_flag** and **alpha_channel_clip_type_flag** and discarded because these syntax elements are relevant only or alpha blending.

**Table 2**

| | |
|---|---|
| alpha_channel_info( payloadSize ) { | **Descriptor** |
| **alpha_channel_idc** | u(3) |
| **alpha_channel_cancel_flag** | u(1) |
| if( !alpha_channel_cancel_flag ) { | |
| **alpha_channel_use_idc** | u(3) |
| **alpha_channel_bit_depth_minus8** | u(3) |
| if( alpha_channel_idc = = 0 ) { | |
| **alpha_transparent_value** | u(v) |
| **alpha_opaque_value** | u(v) |
| **alpha_channel_incr_flag** | u(1) |
| **alpha_channel_clip_flag** | u(1) |
| if( alpha_channel_clip_flag ) | |
| **alpha_channel_clip_type_flag** | u(1) |
| } | |
| } | |
| } | |

In one second variant of the first exemplary embodiment, the additional syntax element is a syntax element **alpha_channel_id** included in the current ACI SEI message of VSEI is a number that belongs to a range of values indicating alternative post-decoding processes or alternative cascading of post-decoding processes intended to be applied on a video sequence.

For example, when more than one ACI SEI message is present with the same value of syntax element **alpha_channel_id,** the content of these ACI SEI messages shall be the same. When ACI SEI messages are present with more than one value of syntax element **alpha_channel_id,** this may indicate that the post-decoding processes indicated by the different values of syntax element **alpha_channel_id** are alternatives that are provided for different purposes or that a cascading of post-decoding processes may be applied in a sequential order. The value of syntax element **alpha_channel_id** may be in the range of 0 to 2³² - 2, inclusive.

In a variant, values of syntax element **alpha_channel_id** from 0 to 255, inclusive, and from 512 to 2³¹ - 1, inclusive, may be used as determined by an external application. Decoders encountering a value of syntax element **alpha_channel_id** in the range of 256 to 511, inclusive.

Table 3 provides an example of syntax of the alpha channel information SEI message as defined in VSEI and amended according to said second variant of the first exemplary embodiment.

**Table 3**

| | |
|---|---|
| alpha_channel_info( payloadSize ) { | **Descriptor** |
| **alpha_channel_id** | ue(v) |
| **alpha_channel_cancel_flag** | u(1) |
| if( !alpha_channel_cancel_flag ) { | |
| **alpha_channel_use_idc** | u(3) |
| **alpha_channel_bit_depth_minus8** | u(3) |
| **alpha_transparent_value** | u(v) |
| **alpha_opaque_value** | u (v) |
| **alpha_channel_incr_flag** | u(1) |
| **alpha_channel_clip_flag** | u(1) |
| if( alpha_channel_clip_flag ) | |
| **alpha_channel_clip_type_flag** | u(1) |
| } | |
| } | |

In a variant of the second variant of the first exemplary embodiment, the additional syntax element **alpha_channel_id** further indicates how to cascade the post-decoding processing intended to be applied on the decoded video picture.

For example, values of syntax element **alpha_channel_id** from 0 to 255, inclusive, indicate that the alpha channel information is for alpha blending purposes. In variant, the different alpha blending operations may be intended to be executed in increasing order of syntax element **alpha_channel_id** values, irrespective of q layer order.

Values of syntax element **alpha_channel_id** from 256 to 511, inclusive, indicate that the alpha channel information is for transparent display purposes. In addition, the different pixel's transparency adjustment operations are intended to be executed in increasing order of alpha_channel_id values, irrespective of the layer order.

In variant, the different post-decoding processes, alpha blending and pixel's transparency adjustment operations are intended to be executed in increasing order of syntax element **alpha_channel_id** values, irrespective of a layer order and the nature of the post-decoding processing.

In another variant of the second variant, the syntax element **alpha_channel_id,** when equal to a particular value, further indicates that parameters of the ACI SEI message not involved in the pixel's transparency adjustment are not written in the bitstream or not read from the bitstream.

Table 4 provides an example of syntax of the alpha channel information SEI message amended according to said variant of the second variant. In this example, when the syntax element **alpha_channel_id** is greater or equal to a particular value (here 256), i.e. when the post-decoding processing is not alpha blending, the syntax elements **alpha_transparent_value, alpha_opaque_value, alpha_channel_incr_flag, alpha_channel_clip_flag** and **alpha_channel_clip_type_flag** and discarded because these syntax elements are relevant only or alpha blending.

**Table 4**

| | |
|---|---|
| alpha_channel_info( payloadSize ) { | **Descriptor** |
| **alpha_channel_id** | ue(v) |
| **alpha_channel_cancel_flag** | u(1) |
| if( !alpha_channel_cancel_flag ) { | |
| **alpha_channel_use_idc** | u(3) |
| **alpha_channel_bit_depth_minus8** | u(3) |
| if( alpha_channel_id < 256 ) { | |
| **alpha_transparent_value** | u(v) |
| **alpha_opaque_value** | u(v) |
| **alpha_channel_incr_flag** | u(1) |
| **alpha_channel_clip_flag** | u(1) |
| if( alpha_channel_clip_flag ) | |
| **alpha_channel_clip_type_flag** | u(1) |
| } | |
| } | |
| } | |

In a second exemplary embodiment, the alpha channel indicator is a particular value of the existing syntax element **alpha_channel_use_idc** of the ACI SEI message of VSEI.

The particular value of the syntax element **alpha_channel_use_idc** indicates a particular post-decoding processing for transparency display purposes, i.e. said particular value indicates that the alpha channel information is intended for pixel's transparency adjustment of a transparent screen.

For example, the syntax element **alpha_channel_use_idc**
- equal 0 to indicate that for alpha blending purposes the decoded samples of the associated primary picture should be multiplied by the interpretation sample values of the auxiliary coded picture in the display process after output from the decoding process;
- equal 1 to indicate that for alpha blending purposes the decoded samples of the associated primary picture should not be multiplied by the interpretation sample values of the auxiliary coded picture in the display process after output from the decoding process;
- equal 2 to indicate that the usage of the auxiliary picture is unspecified; and
- according to the present invention, equal 3 to indicate that for transparent display purposes the pixel's transparency of a transparent screen is adjusted using the interpretation sample values of the auxiliary coded picture in the display process after output from the decoding process.

In one third exemplary embodiment, the alpha channel indicator is particular type of auxiliary picture signalled in the SCI SEI message of VSEI.

While one can still signal an alpha channel indicator as part of the ACI SEI messages that indicates for which type of post-decoding processing the alpha channel is intended for, there is a benefit to very easily identify the purpose of the alpha channel information either for alpha blending or for the transparent display. Easily identifying the purpose means a unique location, i.e. a unique parameter, to express this purpose. One way to achieve this is to signal an alpha channel indicator as a particular type of auxiliary picture in the SDI SEI message of VSEI.

In VSEI, (section 8.19.2), a table is defined to map the type of auxiliary picture to a value of a so-called array **sdi_aux_id[ i ]** for a i-th layer. A value **sdi_aux_id**[ i ] equal 0 to indicate that the i-th layer in the current CVS does not contain auxiliary pictures. A value **sdi_aux_id**[ i ] equal to 1 indicates the auxiliary picture in the i-th layer corresponds to alpha channel information. A value **sdi_aux_id**[ i ] equal to 2 indicates the auxiliary picture in the i-th layer corresponds to a depth information.

In accordance with the third exemplary embodiment, a value **sdi_aux_id**[ i ] equal to 3 indicates the auxiliary picture in the i-th layer is intended for transparency display purposes. In this case the layer i also contains associated ACI SEI messages but generated for the purpose of displaying a decoded video on transparent display.

Table 5 provides an example of the table of VSEI as amended by the third exemplary embodiment.

**Table 5**

| **sdi_aux_id[ i ]** | **Name** | **Type of auxiliary pictures** |
|---|---|---|
| 1 | AUX_ALPHA | Alpha plane for alpha blending |
| 2 | AUX_DEPTH | Depth picture |
| 3 | AUX_TRANSPAR ENT_DISPLAY | Alpha plane for transparent display |
| 4..127 | | Reserved |
| 128..159 | | Unspecified |
| 160..255 | | Reserved |

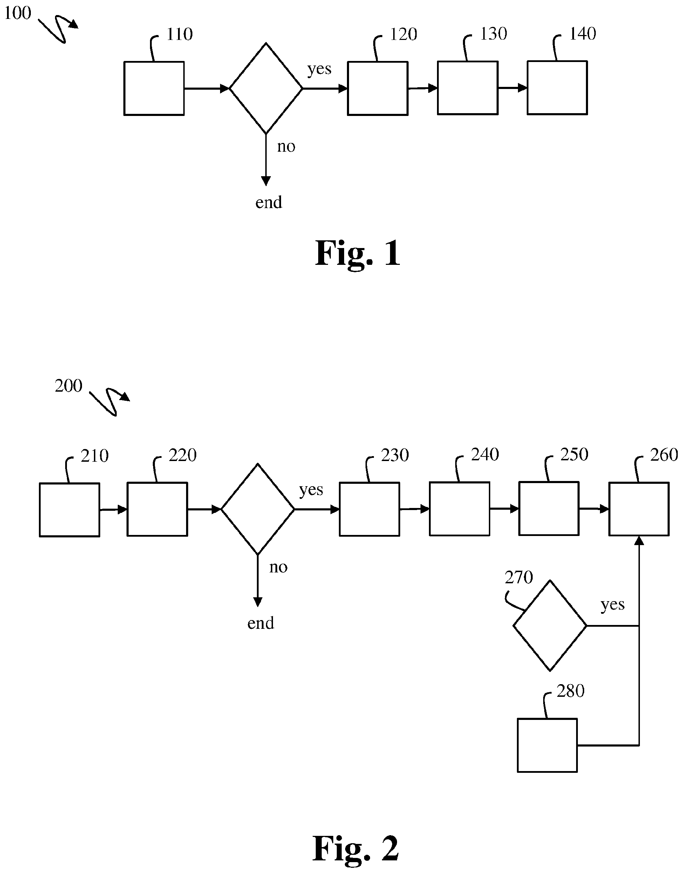

**Figure 1** shows a schematic block diagram of steps of the method 100 of encoding into a bitstream a video sequence associated with alpha channel information and intended to be displayed on a transparent screen in accordance with an exemplary embodiment.

In step 110, an alpha channel indicator is written into the bitstream. The alpha channel indicator indicates for which type of post-processing of the video sequence an alpha channel information associated with the video sequence is intended for.

A type of post-processing of the video sequence may be a pixel's transparency adjustment of a transparent screen when the video sequence is intended to be displayed on said transparent screen.

Another type of post-processing of the video sequence may be alpha blending.

If the alpha channel indicator indicates that the alpha channel information is intended for pixel's transparency adjustment of a transparent screen, step 110 is followed by steps 120-140.

In step 120, the video sequence is encoded into the bitstream as encoded data.

In step 130, a transparency information mask associated with the video sequence is determined.

In step 140, an alpha channel information representative of said transparency information mask is encoded into the bitstream as encoded data.

In one exemplary embodiment of method 100, the alpha channel information associated with a picture of the video sequence is an alpha channel picture.

In one exemplary embodiment, an alpha channel SEI (Supplemental Enhancement Information) message is also written in the bitstream. The content of said SEI message describes the post-decoding processing intended to be applied on the decoded video picture. In particular, the alpha channel SEI message comprises information representative of the alpha channel indicator.

Any legacy video encoder may be used for encoding a video sequence and associated alpha channel pictures and possibly SEI messages.

For example, VVC may be used.

**Figure 2** shows a schematic block diagram of steps of the method 200 of decoding from a bitstream a video sequence associated with alpha channel information intended to be displayed on a transparent screen in accordance with an exemplary embodiment.

In step 210, a SEI parser detects and extracts an alpha channel SEI message from a bitstream. The alpha channel SEI message conveys an alpha channel indicator.

In step 220, the alpha channel indicator is read from the alpha channel SEI message.

If the alpha channel indicator indicates that the alpha channel information is intended for adjusting pixel's transparency of a transparent screen, then step 220 is followed by steps 230-250.

In step 230, encoded data is decoded from the bitstream in a decoded video sequence.

In step 240 encoded data is decoded from the bitstream in a decoded alpha channel video sequence conveying the alpha channel information.

In one exemplary embodiment, the decoded video sequence may correspond to a main (primary) video sequence and the decoded alpha channel video sequence may correspond to an auxiliary video sequence associated with the main video sequence.

In step 250, a transparency information mask is determined from transparency information associated with the decoded alpha channel video sequence.

In step 260, the pixel's transparency of the transparent screen is adjusted based on the transparency information mask.

For example, the transparency information mask contains an array of adjustment coefficients associated with samples of the decoded video sequence in order to adjust the pixel's transparency perceived on the transparent screen. In a simple case, the pixel's transparency adjustment may be similar to an alpha blending operation wherein the background video sequence would be a black video sequence for OLED screen, respectively a white video sequence for LCD screens, to adjust the pixel's transparency. By doing so, a low coefficient in the transparency information mask, say 0, would lead to cancel the associated sample in the decoded video sequence and leave the sample from the black video sequence, i.e. a black sample (value of 0 or close to 0), respectively from the white video sequence, i.e. a white sample (value of 255 or close to 255 for 8-bit depth), which in turns make a pixel at that location fully transparent on the transparent screen.

Any legacy video decoder may be used for decoding a video sequence and associated alpha channel pictures and possibly SEI messages.

For example, VVC may be used.

In one exemplary embodiment, the method 200 further comprises determining (step 270) whether a dimming adjustment of a dimming back panel of a transparent screen is requested, and the pixel's transparency of the transparent screen is adjusted (step 260) by adjusting the dimming back panel if a diming adjustment is requested.

In one exemplary embodiment, the method 200 further comprises acquiring (step 280) an ambient lighting condition data and the pixel's transparency of the transparent screen is adjusted (step 260) based on the transparency information mask and the ambient lighting conditions.

In one exemplary embodiment of the methods 100 and 200, the alpha channel indicator is the particular syntax element **alpha_channel_idc** or **alpha_channel_id** as described above.

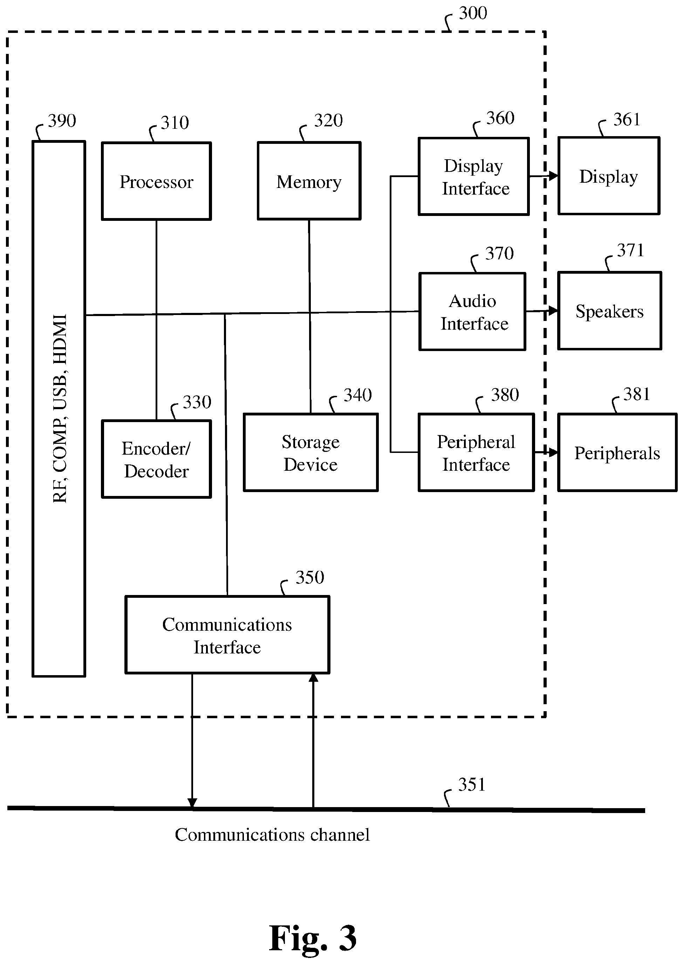

**Figure 3** shows a schematic block diagram illustrating an example of a system 300 in which various aspects and exemplary embodiments are implemented.

System 300 may be embedded as one or more devices including the various components described below. In various exemplary embodiments, system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 300, singly or in combination, may be embodied in a single integrated circuit (IC), multiple ICs, and/or discrete components. For example, in at least one exemplary embodiment, the processing and encoder/decoder elements of system 300 may be distributed across multiple ICs and/or discrete components. In various exemplary embodiments, system 300 may be communicatively coupled to other similar systems, or to other electronic devices, via, for example, a communications bus or through dedicated input and/or output ports.

System 300 may include at least one processor 310 configured to execute instructions loaded therein for implementing, for example, the various aspects described in the present application. Processor 310 may include embedded memory, input output interface, and various other circuitries as known in the art. System 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

System 300 may include an encoder/decoder module 330 configured, for example, to process data to provide encoded/decoded video picture data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various exemplary embodiments, one or more of processor 310, memory 320, storage device 340, and encoder/decoder module 330 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 310 and/or the encoder/decoder module 330 may be used to store instructions and to provide working memory for processing that may be performed during encoding or decoding.

In other exemplary embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 351. The communication interface 350 may include, but is not limited to, a transceiver configured to transmit and to receive data over communication channel 351. The communication interface 350 may include, but is not limited to, a modem or network card and the communication channel 351 may be implemented, for example, within a wired and/or a wireless medium.

Data may be streamed to system 300, in various exemplary embodiments, using a Wi-Fi network such as IEEE 802.11. The Wi-Fi signal of these exemplary embodiments may be received over the communications channel 351 and the communications interface 350 which are adapted for Wi-Fi communications. The communications channel 351 of these exemplary embodiments may be typically connected to an access point or router that provides access to outside networks including the Internet for allowing streaming applications and other over-the-top communications.

Other exemplary embodiments may provide streamed data to the system 300 using a set-top box that delivers the data over the HDMI connection of the input block 390.

Still other exemplary embodiments may provide streamed data to the system 300 using the RF connection of the input block 390.

The streamed data may be used as a way for signaling information used by the system 300. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 300 may provide an output signal to various output devices, including a display 361, speakers 371, and other peripheral devices 381. The other peripheral devices 381 may include, in various examples of exemplary embodiments, one or more of a stand-alone DVR, a disk player, a stereo system, a lighting system, and other devices that provide a function based on the output of system 300.

In various exemplary embodiments, control signals may be communicated between the system 300 and the display 361, speakers 371, or other peripheral devices 381 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 351 via the communications interface 350. The display 361 and speakers 371 may be integrated in a single unit with the other components of system 300 in an electronic device such as, for example, a television.

In various exemplary embodiments, the display interface 360 may include a display driver, such as, for example, a timing controller (T Con) chip.

The display 361 and speaker 371 may alternatively be separate from one or more of the other components, for example, if the RF portion of input 390 is part of a separate set-top box. In various exemplary embodiments in which the display 361 and speakers 371 may be external components, the output signal may be provided via dedicated output connections, including, for example, HDMI ports, USB ports, or COMP outputs.

In **Figures 1-3****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 340 (**Figure 3**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 310 or by hardware, or by a combination of hardware and software. As a non-limiting example, the exemplary embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (100) of encoding into a bitstream a video sequence associated with alpha channel information, wherein the method comprises:
- writing (110) an alpha channel indicator into the bitstream, the alpha channel indicator being comprised in signaling information of the bitstream and indicating for which type of post-processing of a video sequence the alpha channel information associated with the video sequence is intended;
**characterized in that**
- the alpha channel indicator indicates that the alpha channel information is intended for pixels transparency adjustment of a transparent screen;
- encoding (120) the video sequence into the bitstream as encoded data;
- determining (130) a transparency information mask associated with the video sequence, said transparency information mask indicating either full opacity, full transparency or intermediate transparency for either an entire screen or localised up to a granularity of a pixel; and
- encoding (140) into the bitstream alpha channel information representative of said transparency information mask as encoded data.

2. A method (200) of decoding from a bitstream a video sequence associated with alpha channel information, wherein the method comprises:
- extracting (210) a signaling information from a bitstream, said signaling information conveying an alpha channel indicator that indicates for which type of post-processing of a video sequence the alpha channel information is intended;
- reading (220) the alpha channel indicator from the signaling information t; **characterized in that**
- determining the alpha channel indicator indicates that the alpha channel information is intended for adjusting pixels transparency of a transparent screen;
- decoding (230) encoded data from the bitstream in a decoded video sequence;
- decoding (240) encoded data from the bitstream in a decoded alpha channel video sequence conveying the alpha channel information;
- determining (250) a transparency information mask from transparency information associated with the decoded alpha channel video sequence, said transparency information mask indicating either full opacity, full transparency or intermediate transparency for either an entire screen or localised up to a granularity of a pixel ; and
- adjusting (260) pixels transparency of the transparent screen based on the transparency information mask, said pixels being derived from sample values of the decoded video sequence.

3. The method of claim 2, wherein the method further comprises determining (270) whether a dimming adjustment of a dimming back panel of a transparent screen is requested, and the pixels transparency is adjusted (260) by adjusting the dimming back panel if a diming adjustment is requested.

4. The method of claim 2 or 3, wherein the method further acquiring (280) an ambient lighting condition data and the pixels transparency is adjusted (260) based on the transparency information mask and the ambient lighting conditions.

5. The method of one of claims 1 to 4, wherein the alpha channel indicator is a particular syntax element **(alpha_channel_idc, alpha_channel_id)** included in an alpha channel information SEI message.

6. The method of claim 5, wherein the alpha-channel indicator is a particular syntax element (**alpha_channel_idc)**
- equal 0 to indicate that the alpha channel information SEI message is intended for alpha blending of the decoded video picture with alpha channel information ;
- equal 1 to indicate that the alpha channel information SEI message is intended for adjusting (150) pixel's transparency of a transparent screen.

7. The method of claim 6, wherein the particular syntax element (**alpha_channel_idc)** equal 1, further indicates that parameters of the alpha channel information SEI message not involved in the pixel's transparency adjustment are not written into or not read from the bitstream.

8. The method of claim 5, wherein the alpha-channel indicator is a particular syntax element (**alpha_channel_id)** that is a number that belongs to a range of values indicating either pixels transparency adjustment of the transparent screen or alternative type of processing.

9. The method of claim 8, wherein the particular syntax element (**alpha_channel_id)** further indicates how to cascade post-decoding processing intended to be applied on the decoded video picture.

10. The method of claim 8 or 9, wherein the particular syntax element (**alpha_channel_id)**equal 1, further indicates that parameters of the alpha channel information SEI message not involved in the pixel's transparency adjustment are not written into the bitstream or not read from the bitstream.

11. The method of one of claims 1 to 4, wherein the alpha channel indicator is a particular value of an existing syntax element (**alpha_channel_use_idc**) of the alpha channel information SEI message, said particular value indicating that the alpha channel information is intended for pixel's transparency adjustment.

12. The method of one of claims 1 to 4, wherein the alpha channel indicator is particular type of auxiliary picture signalled in an SEI message.

13. A bitstream, formatted to include encoded data and an alpha channel indicator obtained from a method of claim 1.

14. An apparatus comprises means for performing one of the method claimed in any one of claims 1 to 12.

15. A computer program product including instructions which, when the program is executed by one or more processors, causes the one or more processors to carry out a method claimed in any one of claims 1 to 12.

16. A non-transitory storage medium carrying instructions of program code for executing a method claimed in any one of claims 1 to 12.
1. A method (100) of encoding into a bitstream a video sequence associated with alpha channel information, wherein the method comprises:
- writing (110) an alpha channel indicator into the bitstream that indicates for which type of post-processing of a video sequence the alpha channel information associated with the video sequence is intended for;
**characterized in that**
- if the alpha channel indicator indicates that the alpha channel information is intended for pixels transparency adjustment of a transparent screen;
- encoding (120) the video sequence into the bitstream as encoded data;
- determining (130) a transparency information mask associated with the video sequence, said transparency information mask indicating either full opacity, full transparency or intermediate transparency for either an entire screen or localised up to a granularity of a pixel; and
- encoding (140) into the bitstream alpha channel information representative of said transparency information mask as encoded data;
- otherwise encoding information relative to another type of post-processing of the video sequence.
2. A method (200) of decoding from a bitstream a video sequence associated with alpha channel information, wherein the method comprises reading (220) an alpha channel indicator from a bitstream that indicates for which type of post-processing of a video sequence the alpha channel information is intended for;
**characterized in that**
- if the alpha channel indicator indicates that the alpha channel information is intended for adjusting pixels transparency of a transparent screen;
- decoding (230) encoded data from the bitstream in a decoded video sequence;
- decoding (240) encoded data from the bitstream in a decoded alpha channel video sequence conveying the alpha channel information;
- determining (250) a transparency information mask from transparency information associated with the decoded alpha channel video sequence, said transparency information mask indicating either full opacity, full transparency or intermediate transparency for either an entire screen or localised up to a granularity of a pixel ; and
- adjusting (260) pixels transparency of the transparent screen based on the transparency information mask, said pixels being derived from sample values of the decoded video sequence.
- otherwise decoding information relative to another type of post-processing of the video sequence and applying said other type of post-processing on the decoded video sequence.
3. The method of claim 2, wherein the method further comprises determining (270) whether a dimming adjustment of a dimming back panel of a transparent screen is requested, and the pixels transparency is adjusted (260) by adjusting the dimming back panel if a diming adjustment is requested.
4. The method of claim 2 or 3, wherein the method further acquiring (280) an ambient lighting condition data and the pixels transparency is adjusted (260) based on the transparency information mask and the ambient lighting conditions.
5. The method of one of claims 1 to 4, wherein the alpha channel indicator is a particular syntax element (**alpha_channel_idc, alpha_channel_id)** included in an alpha channel information SEI message.
6. The method of claim 5, wherein the particular syntax element (**alpha_channel_idc)**
- equal 0 to indicate that the alpha channel information SEI message is intended for alpha blending of the decoded video picture with alpha channel information ;
- equal 1 to indicate that the alpha channel information SEI message is intended for adjusting (150) pixel's transparency of a transparent screen.
7. The method of claim 6, wherein the particular syntax element (**alpha_channel_idc)** equal 1, further indicates that parameters of the alpha channel information SEI message not involved in the pixel's transparency adjustment are not written into or not read from the bitstream.
8. The method of claim 5, wherein the particular syntax element (**alpha_channel_id)** is a number that belongs to a range of values indicating either pixels transparency adjustment of the transparent screen or alternative type of processing.
9. The method of claim 8, wherein the particular syntax element (**alpha_channel_id)** further indicates how to cascade post-decoding processing intended to be applied on the decoded video picture.
10. The method of claim 8 or 9, wherein the particular syntax element (**alpha_channel_id)** equal 1, further indicates that parameters of the alpha channel information SEI message not involved in the pixel's transparency adjustment are not written into the bitstream or not read from the bitstream.
11. The method of one of claims 1 to 4, wherein the alpha channel indicator is a particular value of an existing syntax element (**alpha_channel_use_idc)** of the alpha channel information SEI message, said particular value indicating that the alpha channel information is intended for pixel's transparency adjustment.
12. The method of one of claims 1 to 4, wherein the alpha channel indicator is particular type of auxiliary picture signalled in an SEI message.
13. A bitstream, formatted to include encoded data and an alpha channel indicator obtained from a method of claim 1.
14. An apparatus comprises means for performing one of the method claimed in any one of claims 1 to 12.
15. A computer program product including instructions which, when the program is executed by one or more processors, causes the one or more processors to carry out a method claimed in any one of claims 1 to 12.
16. A non-transitory storage medium carrying instructions of program code for executing a method claimed in any one of claims 1 to 12.

## Patentansprüche

1. Verfahren (100) zum Codieren einer Videosequenz, die mit Alphakanalinformationen verknüpft ist, in einen Bitstrom, wobei das Verfahren umfasst:
- Schreiben (110) eines Alphakanalindikators in den Bitstrom, wobei der Alphakanalindikator in Signalisierungsinformationen des Bitstroms umfasst ist und anzeigt, für welche Art von Nachbearbeitung einer Videosequenz die mit der Videosequenz verknüpften Alphakanalinformationen vorgesehen sind;
**dadurch gekennzeichnet, dass**
- der Alphakanalindikator anzeigt, dass die Alphakanalinformationen zur Anpassung der Pixeltransparenz eines transparenten Bildschirms vorgesehen sind;
- Codieren (120) der Videosequenz als codierte Daten in den Bitstrom;
- Bestimmen (130) einer Transparenzinformationsmaske, die mit der Videosequenz verknüpft ist, wobei die Transparenzinformationsmaske entweder vollständige Undurchsichtigkeit, vollständige Transparenz oder eine dazwischenliegende Transparenz für entweder einen gesamten Bildschirm oder lokalisiert bis zu einer Granularität von einem Pixel anzeigt; und
- Codieren (140) von Alphakanalinformationen, die für die Transparenzinformationsmaske repräsentativ sind, als codierte Daten in den Bitstrom.

2. Verfahren (200) zum Decodieren einer Videosequenz, die mit Alphakanalinformationen verknüpft ist, aus einem Bitstrom, wobei das Verfahren umfasst:
- Extrahieren (210) einer Signalisierungsinformation aus einem Bitstrom, wobei die Signalisierungsinformation einen Alphakanalindikator übermittelt, der anzeigt, für welche Art von Nachbearbeitung einer Videosequenz die Alphakanalinformationen vorgesehen sind;
- Auslesen (220) des Alphakanalindikators aus der Signalisierungsinformation t;
**dadurch gekennzeichnet, dass**
- das Bestimmen des Alphakanalindikators anzeigt, dass die Alphakanalinformationen zum Anpassen der Pixeltransparenz eines transparenten Bildschirms vorgesehen sind;
- Decodieren (230) von codierten Daten aus dem Bitstrom in einer decodierten Videosequenz;
- Decodieren (240) von codierten Daten aus dem Bitstrom in einer decodierten Alphakanal-Videosequenz, die die Alphakanalinformationen übermittelt;
- Bestimmen (250) einer Transparenzinformationsmaske aus Transparenzinformationen, die mit der decodierten Alphakanal-Videosequenz verknüpft sind, wobei die Transparenzinformationsmaske entweder vollständige Undurchsichtigkeit, vollständige Transparenz oder eine dazwischenliegende Transparenz für entweder einen gesamten Bildschirm oder lokalisiert bis zu einer Granularität von einem Pixel anzeigt; und
- Anpassen (260) der Pixeltransparenz des transparenten Bildschirms auf Basis der Transparenzinformationsmaske, wobei die Pixel aus Stichprobenwerten der decodierten Videosequenz abgeleitet werden.

3. Verfahren nach Anspruch 2, wobei das Verfahren weiter das Bestimmen (270) umfasst, ob eine Dimm-Anpassung eines dimmbaren Rückpanels eines transparenten Bildschirms gefordert wird, und, wenn eine Dimm-Anpassung gefordert wird, die Pixeltransparenz durch Anpassen des dimmbaren Rückpanels angepasst (260) wird.

4. Verfahren nach Anspruch 2 oder 3, wobei das Verfahren weiter das Erfassen (280) von Umgebungslichtbedingungsdaten umfasst und die Pixeltransparenz auf Basis der Transparenzinformationsmaske und der Umgebungslichtbedingungen angepasst (260) wird.

5. Verfahren nach einem der Ansprüche 1 bis 4, wobei der Alphakanalindikator ein bestimmtes Syntaxelement (**alpha_channel_idc, alpha_channel_id**) ist, das in einer Alphakanalinformationen-SEI-Nachricht beinhaltet ist.

6. Verfahren nach Anspruch 5, wobei der Alphakanalindikator ein bestimmtes Syntaxelement (**alpha_channel_idc)**
- gleich 0 ist, um anzuzeigen, dass die Alphakanalinformationen-SEI-Nachricht für Alpha-Blending des decodierten Videobildes mit Alphakanalinformationen vorgesehen ist;
- gleich 1 ist, um anzuzeigen, dass die Alphakanalinformationen-SEI-Nachricht zum Anpassen (150) der Pixeltransparenz eines transparenten Bildschirms vorgesehen ist.

7. Verfahren nach Anspruch 6, wobei das bestimmte Syntaxelement (**alpha_channel_idc**) gleich 1 weiter anzeigt, dass Parameter der Alphakanalinformationen-SEI-Nachricht, die nicht an der Anpassung der Pixeltransparenz beteiligt sind, nicht in den Bitstrom geschrieben oder aus dem Bitstrom gelesen werden.

8. Verfahren nach Anspruch 5, wobei der Alphakanalindikator ein bestimmtes Syntaxelement (**alpha_channel_id)** ist, bei dem es sich um eine Zahl handelt, die zu einem Wertebereich gehört, der entweder die Anpassung der Pixeltransparenz des transparenten Bildschirms oder eine alternative Art der Verarbeitung anzeigt.

9. Verfahren nach Anspruch 8, wobei das bestimmte Syntaxelement (**alpha_channel_id**) weiter anzeigt, wie die Verarbeitung nach dem Decodieren, die auf das decodierte Videobild angewendet werden soll, kaskadiert werden soll.

10. Verfahren nach Anspruch 8 oder 9, wobei das bestimmte Syntaxelement (**alpha_channel_id)** gleich 1 weiter anzeigt, dass Parameter der Alphakanalinformationen-SEI-Nachricht, die nicht an der Anpassung der Pixeltransparenz beteiligt sind, nicht in den Bitstrom geschrieben oder nicht aus dem Bitstrom gelesen werden.

11. Verfahren nach einem der Ansprüche 1 bis 4, wobei der Alphakanalindikator ein bestimmter Wert eines bestehenden Syntaxelements (**alpha_channel_use_idc**) der Alphakanalinformationen-SEI-Nachricht ist, wobei der bestimmte Wert anzeigt, dass die Alphakanalinformationen zur Anpassung der Pixeltransparenz vorgesehen sind.

12. Verfahren nach einem der Ansprüche 1 bis 4, wobei der Alphakanalindikator eine bestimmte Art von Hilfsbild ist, die in einer SEI-Nachricht signalisiert wird.

13. Bitstrom, der so formatiert ist, dass er codierte Daten und einen Alphakanalindikator beinhaltet, der anhand eines Verfahrens nach Anspruch 1 erhalten wird.

14. Einrichtung, die Mittel zum Durchführen eines der Verfahren nach einem der Ansprüche 1 bis 12 umfasst.

15. Computerprogrammprodukt, das Anweisungen beinhaltet, die, wenn das Programm von einem oder mehreren Prozessoren ausgeführt wird, bewirken, dass der eine oder die mehreren Prozessoren ein Verfahren nach einem der Ansprüche 1 bis 12 ausführen.

16. Nichtflüchtiges Speichermedium, das Programmcodeanweisungen zum Ausführen eines Verfahrens nach einem der Ansprüche 1 bis 12 enthält.

## Revendications

1. Procédé (100) de codage, dans un flux binaire, d'une séquence vidéo associée à des informations de canal alpha, le procédé comprenant :
- l'écriture (110) d'un indicateur de canal alpha dans le flux binaire, ledit indicateur de canal alpha étant inclus dans les informations de signalisation du flux binaire et indiquant à quel type de post-traitement d'une séquence vidéo sont destinées les informations de canal alpha associées à ladite séquence vidéo ;
**caractérisé en ce que**
- l'indicateur de canal alpha indique que les informations de canal alpha sont destinées au réglage de la transparence des pixels d'un écran transparent ;
- le codage (120) de la séquence vidéo dans le flux binaire sous forme de données codées ;
- la détermination (130) d'un masque d'informations de transparence associé à la séquence vidéo, ledit masque d'informations de transparence indiquant soit une opacité totale, soit une transparence totale, soit une transparence intermédiaire, soit pour l'ensemble d'un écran, soit de manière localisée jusqu'à une granularité d'un pixel ; et
- le codage (140) dans le flux binaire d'informations de canal alpha représentatives dudit masque d'informations de transparence sous forme de données codées.

2. Procédé (200) de décodage, à partir d'un flux binaire, d'une séquence vidéo associée à des informations de canal alpha, dans lequel le procédé comprend :
- l'extraction (210) d'informations de signalisation à partir d'un flux binaire, lesdites informations de signalisation véhiculant un indicateur de canal alpha qui indique à quel type de post-traitement d'une séquence vidéo les informations de canal alpha sont destinées ;
- la lecture (220) de l'indicateur de canal alpha à partir des informations de signalisation ;
**caractérisé en ce que**
- la détermination de l'indicateur de canal alpha indique que les informations de canal alpha sont destinées à ajuster la transparence des pixels d'un écran transparent ;
- le décodage (230) de données codées issues du flux binaire dans une séquence vidéo décodée ;
- décoder (240) les données codées issues du flux binaire dans une séquence vidéo à canal alpha décodée transmettant les informations de canal alpha ;
- la détermination (250) d'un masque d'informations de transparence à partir des informations de transparence associées à la séquence vidéo de canal alpha décodée, ledit masque d'informations de transparence indiquant soit une opacité totale, soit une transparence totale, soit une transparence intermédiaire, soit pour l'ensemble d'un écran, soit de manière localisée jusqu'à une granularité d'un pixel ; et
- ajuster (260) la transparence des pixels de l'écran transparent sur la base du masque d'informations de transparence, lesdits pixels étant dérivés de valeurs d'échantillonnage de la séquence vidéo décodée.

3. Procédé selon la revendication 2, dans lequel le procédé comprend en outre la détermination (270) de la nécessité d'un réglage de l'atténuation d'un panneau arrière d'atténuation d'un écran transparent, et la transparence des pixels est ajustée (260) en réglant le panneau arrière d'atténuation si un réglage de l'atténuation est demandé.

4. Procédé selon la revendication 2 ou 3, dans lequel le procédé comprend en outre l'acquisition (280) de données relatives aux conditions d'éclairage ambiant, et la transparence des pixels est ajustée (260) en fonction du masque d'informations de transparence et des conditions d'éclairage ambiant.

5. Procédé selon l'une des revendications 1 à 4, dans lequel l'indicateur de canal alpha est un élément syntaxique particulier (**alpha_channel_idc, alpha_channel_id)** inclus dans un message SEI d'informations de canal alpha.

6. Procédé selon la revendication 5, dans lequel l'indicateur de canal alpha est un élément de syntaxe particulier (**alpha_channel_idc)**
- égal à 0 pour indiquer que le message SEI d'informations de canal alpha est destiné au mélange alpha de l'image vidéo décodée avec des informations de canal alpha ;
- égal à 1 pour indiquer que le message SEI d'informations de canal alpha est destiné à ajuster (150) la transparence d'un pixel d'un écran transparent.

7. Procédé selon la revendication 6, dans lequel l'élément syntaxique particulier (**alpha_channel_idc)**, égal à 1, indique en outre que les paramètres du message SEI d'informations de canal alpha qui ne concernent pas le réglage de la transparence des pixels ne sont ni écrits dans le flux binaire ni lus à partir de celui-ci.

8. Procédé selon la revendication 5, dans lequel l'indicateur de canal alpha est un élément syntaxique particulier (**alpha_channel_id)** qui est un nombre appartenant à une plage de valeurs indiquant soit l'ajustement de la transparence des pixels de l'écran transparent, soit un autre type de traitement.

9. Procédé selon la revendication 8, dans lequel l'élément syntaxique particulier (**alpha_channel_id)** indique en outre comment enchaîner les traitements post-décodage destinés à être appliqués à l'image vidéo décodée.

10. Procédé selon la revendication 8 ou 9, dans lequel l'élément syntaxique particulier (**alpha_channel_id)** égal à 1 indique en outre que les paramètres du message SEI d'informations sur le canal alpha qui ne sont pas impliqués dans l'ajustement de la transparence du pixel ne sont pas écrits dans le flux binaire ni lus à partir de celui-ci.

11. Procédé selon l'une des revendications 1 à 4, dans lequel l'indicateur de canal alpha est une valeur particulière d'un élément de syntaxe existant (**alpha_channel_use_idc**) du message SEI d'informations de canal alpha, ladite valeur particulière indiquant que les informations de canal alpha sont destinées à l'ajustement de la transparence du pixel.

12. Procédé selon l'une des revendications 1 à 4, dans lequel l'indicateur de canal alpha est un type particulier d'image auxiliaire signalée dans un message SEI.

13. Flux binaire, formaté pour inclure des données codées et un indicateur de canal alpha obtenu à partir d'un procédé selon la revendication 1.

14. Un dispositif comprenant des moyens pour mettre en œuvre l'un des procédés revendiqués dans l'une quelconque des revendications 1 à 12.

15. Un produit logiciel comprenant des instructions qui, lorsque le programme est exécuté par un ou plusieurs processeurs, amènent ce ou ces processeurs à mettre en œuvre un procédé revendiqué dans l'une quelconque des revendications 1 à 12.

16. Support de stockage non transitoire portant des instructions de code de programme destinées à exécuter un procédé revendiqué dans l'une quelconque des revendications 1 à 12.
